# EUROPÄISCHE PATENTSCHRIFT

(11) **EP 0 990 203 B1**
(45) Veröffentlichungstag und Bekanntmachung des Hinweises auf die Patenterteilung: **05.09.2001**
(21) Anmeldenummer: 98934758.8
(22) Anmeldetag: 20.05.1998
(51) Int. Cl.: G06F 9/40, G06F 9/42, G06F 9/445

(54) **VERFAHREN ZUM STEUERN EINER DATENVERARBEITUNGSANLAGE**
METHOD FOR CONTROLLING A DATA PROCESSING SYSTEM
PROCEDE DE COMMANDE D'UN ORDINATEUR

(30) Priorität: 17.06.1997 DE 19725593
(43) Veröffentlichungstag der Anmeldung: 05.04.2000
(73) Patentinhaber: Fujitsu Siemens Computers GmbH, 81739 München (DE)
(72) Erfinder: WEBER, Christian, D-85586 Poing (DE)
(74) Vertreter: Epping, Wilhelm, Dipl.-Ing.
(86) Internationale Anmeldenummer: DE9801389
(87) Internationale Veröffentlichungsnummer: WO9858311

(56) Entgegenhaltungen:
- WO-A-92/15936
- WO-A-92/15962
- US-A- 5 581 769

## Beschreibung

Die Erfindung betrifft ein Verfahren zum Steuern einer Datenverarbeitungsanlage zum Erzeugen eines Zielprogramms durch Verknüpfen mehrerer Programm-Module.

Bei der Erstellung eines Zielprogramms, das in einer höheren Programmiersprache, beispielsweise COBOL, C, C++, Fortran etc. formuliert ist, werden in der Regel zunächst einzelne Quelltext-Module, beispielsweise Prozeduren und Funktionen erstellt, die unabhängig voneinander durch einen Hochsprach-Übersetzer, auch Compiler genannt, in die Maschinensprache, d.h. in für den Computer unmittelbar verständliche Befehle, übersetzt werden. Die auf diese Weise erzeugten Programm-Module werden dann durch einen Binder, auch Linker genannt, zu einem Zielprogramm verknüpft.

Bei einem Aufruf eines Programm-Moduls durch ein anderes muß sichergestellt sein, daß die beiden am Aufruf beteiligten Programm-Module einheitlichen Verknüpfungsvereinbarungen genügen, um einen fehlerfreien Parametertransfer zwischen dem aufrufenden und dem aufgerufenen Programm-Modul zu gewährleisten. Solche Verknüpfungsvereinbarungen sind beispielsweise Konventionen über Registerbelegungen, Datenformate etc.

Hochsprach-Übersetzer für höhere Programmiersprachen erzeugen beim Übersetzen selbsttätig einen einheitlichen Vereinbarungssatz von Verknüpfungsvereinbarungen, der für alle Programm-Module gültig ist, so daß sich der Programmentwickler nicht um die Verknüpfungsvereinbarung zu kümmern braucht.

Der Programmentwickler hat diese Verknüpfungsvereinbarungen jedoch zu beachten, sobald er Programm-Module, die nicht durch den vorgegebenen Hochsprach-Übersetzer erzeugt worden sind, in das Zielprogramm einbinden will, wie z.B. Programm-Module, die in einer Assembler-Sprache formuliert sind, im folgenden Kurz Assembler-Module genannt. Bei der Assembler-Programmier werden die Verknüpfungsvereinbarungen durch den Programmentwickler selbst programmiert, so daß die Verknüpfungsvereinbarungen untrennbar in dem Assembler-Modul enthalten wie d. Derartige Programm-Module, die nicht durch den vorgegebenen Hochsprach-Übersetzer erzeugt werden können und untrennbar an einen Vereinbarungssatz gekoppelt sind, werden im folgenden als fremde Programm-Module bezeichnet, während die durch den vorgegebenen Hochsprach-Übersetzer erzeugten Module interne Programm-Module genannt werden.

Der Vereinbarungssatz für Modul-Verknüpfungen, der zum Zeitpunkt der Ersterstellung eines Zielprogramms sowohl durch den vorgegebenen Hochsprach-Übersetzer für interne Programm-Module erzeugt als auch in fremden Programm-Modulen entsprechend berücksichtigt worden ist, wird im folgenden als Ausgangs-Vereinbarungssatz bezeichnet.

Soll das Zielprogramm auf ein anderes Computersystem übertragen werden, so ist es in der Regel zweckmäßig, einen neuen, an die Hardware des neuen Computersystems besonders gut angepaßten Vereinbarungssatz für Modul-Verknüpfungen zu verwenden, um gravierende Einbußen bei der Verarbeitungsgeschwindigkeit auf dem neuen Computersystem zu vermeiden. Dieser neue Vereinbarungssatz wird im folgenden als effizienter Vereinbarungssatz bezeichnet. Eine Verwendung dieses effizienten Vereinbarungssatzes ist dabei auch dann erforderlich, wenn kommerziell erhältliche Sammlungen von Programmroutinen des neuen Computersystems - im weiteren Standard-Module genannt - eingebunden werden sollen, die in der Regel nur für den besonders gut an die Hardware angepaßten effizienten Vereinbarungssatz verfügbar sind. Aus diesen Gründen ist es wünschenswert, die Verknüpfungsvereinbarungen des Zielprogramms möglichst umfassend auf den effizienten Vereinbarungssatz umzustellen.

Der vorgegebene Hochsprach-Übersetzer könnte durch Neu-Übersetzung aller Quelltext-Module mit effizientem Vereinbarungssatz die erzeugten internen Programm-Module optimal an die neue Hardware anpassen. Die Verknüpfbarkeit der internen mit den fremden Programm-Modulen, die fest an den Ausgangs-Vereinbarungssatz gekoppelt sind, wäre dann aber nicht mehr gewährleistet.

Zur Lösung dieses Problems ist ein Verfahren bekannt, bei dem Anpassungsroutinen verwendet werden, um von einander abweichende Verknüpfungsvereinbarungen von Programm-Modulen auszugleichen. Um die Vereinbarungssätze von aufrufendem und aufgerufenem Programm-Modul aneinander anzupassen, muß der Programmentwickler bei dem bekannten Verfahren für alle betroffenen Programm-Module eine solche Anpassungsroutine erstellen. Er muß dabei nicht nur die Unterschiede in den Verknüpfungsvereinbarungen, sondern auch die Anzahl und den Typ der bei dem Aufruf jeweils übergebenen Parameter kennen, da diese für jedes Programm-Modul individuell festgelegt sind. Das bekannte Verfahren ist deshalb sehr aufwendig und erschwert die Übertragbarkeit des Zielprogramms auf ein neues Computersystem.

Es ist Aufgabe der Erfindung, ein Verfahren anzugeben, durch das ein Hochsprach-Übersetzer in die Lage versetzt wird, die eben genannten Anpassungsroutinen selbsttätig beim Übersetzen der Programm-Module zu erzeugen, und durch das die Anpassungsroutinen beim Verknüpfen der einzelnen Programm-Module durch einen Binder automatisch in das Zielprogramm eingebunden werden.

Die Erfindung löst diese Aufgabe durch das Verfahren mit den Merkmalen nach Anspruch 1.

Bei dem erfindungsgemäßen Verfahren werden durch einen Hochsprach-Übersetzer erzeugte, einem effizienten Vereinbarungssatz von Verknüpfungsvereinbarungen unterliegende interne Programm-Module mit Namen aus einer internen Namensklasse versehen. Ferner werden einem Ausgangs-Vereinbarungssatz von Verknüpfungsvereinbarungen unterliegende fremde Programm-Module mit Namen aus einer Fremd-Namensklasse versehen, wobei sich die den jeweiligen Vereinbarungssätzen zugeordneten Namensklassen gegenseitig ausschließen. Es werden für die internen Programm-Module jeweils eine Anpassungsroutine erster Art erzeugt, die mit einem dem Namen des zugehörigen internen Programm-Moduls entsprechenden Namen aus der Fremd-Namensklasse versehen wird und die vor einem Aufruf des zugehörigen internen Programm-Moduls eine Anpassung des Ausgangs-Vereinbarungssatzes des aufrufenden fremden Programm-Moduls an den effizienten Vereinbarungssatz des aufzurufenden internen Programm-Moduls vornimmt. Ferner werden Programm-Module von den internen Programm-Modulen aus mit Namen aus der internen Namensklasse aufgerufen. Für die von den internen Programm-Modulen aufzurufenden Programm-Module wird jeweils eine Anpassungsroutine zweiter Art erzeugt, die mit einem dem Namen des zugehörigen Programm-Moduls entsprechenden Namen aus der internen Namensklasse versehen wird und die vor einem Verzweigen zum entsprechenden fremden Programm-Modul eine Anpassung des effizienten Vereinbarungssatzes an den Ausgangs-Vereinbarungssatz des aufzurufenden fremden Programm-Moduls vornimmt, wobei die Anpassungsroutine zweiter Art mit einem Bindeattribut versehen ist, so daß sie nur dann in ein Zielprogramm eingebunden wird, wenn neben ihr kein gleichnamiges internes Programm-Modul vorhanden ist. Weiterhin werden die internen Programm-Module, die fremden Programm-Module und die benötigten Anpassungsroutinen erster und zweiter Art miteinander zu dem Zielprogramm verknüpft.

Durch die Maßnahme, daß die internen und die fremden Programm-Module mit Namen aus einander ausschließenden Namensklassen versehen werden, ist für den Binder erkennbar, welchem Vereinbarungssatz das jeweils einzubindende Programm-Modul zuzuordnen ist, so daß ein versehentliches Verknüpfen von Programm-Modulen, die unterschiedlichen Verknüpfungsvereinbarungen unterliegen, sicher verhindert werden kann. Bei der Übersetzung der internen Programm-Module kann der Hochsprach-Übersetzer jeweils eine Anpassungsroutine erster Art automatisch erzeugen, da dem Hochsprach-Übersetzer die für diesen Zweck wesentlichen Informationen, nämlich die Anzahl und der Typ der in dem erzeugten internen Programm-Modul verwendeten Parameter, bekannt sind. Die fremden Programm-Module werden von den internen Programm-Modulen über die Anpassungsroutinen zweiter Art aufgerufen, die mit Namen aus der internen Namensklasse versehen sind und zu dem zugehörigen fremden Programm-Modul verzweigen. Auf diese Weise sind die für die Anpassung der unterschiedlichen Vereinbarungssätze notwendigen Anpassungsroutinen zweiter Art für die von den internen Programm-Modulen aufgerufenen fremden Programm-Module automatisch in das Zielprogramm eingebunden. Da die Anpassungsroutinen zweiter Art mit geeigneten Bindeattributen versehen sind, werden sie nur für solche Aufrufe eingebunden und durchlaufen, für die eine Anpassung des effizienten Vereinbarungssatzes an den Ausgangs-Vereinbarungssatz notwendig ist.

Bei dem vorgestellten Verfahren werden die Anpassungsroutinen beim Übersetzen durch den Hochsprach-Übersetzer automatisch erzeugt, durch den Binder in das Zielprogramm eingebunden und beim Abarbeiten des Zielprogramms aufgerufen. Insbesondere entfällt für den Programmentwickler die Notwendigkeit, die Anpassungsroutinen selbst zu erstellen. Die Erfindung erlaubt es, daß die internen und fremden Programm-Module korrekt über den Ausgangs-Vereinbarungssatz miteinander verknüpft werden, falls dies nötig ist. Die fremden Programm-Module können Assembler-Module oder durch einen anderen Hochsprach-Übersetzer erzeugte Programm-Module sein, die den Verknüpfungsvereinbarungen des Ausgangs-Vereinbarungssatzes unterliegen. Die, durch den vorgegebenen Hochsprach-Übersetzer erzeugten internen Programm-Module können untereinander über den effizienten Vereinbarungssatz miteinander verknüpft werden, wodurch die Abarbeitungsgeschwindigkeit des Zielprogramms erhöht wird.

Eine vorteilhafte Weiterbildung der Erfindung besteht darin, daß die Namen der internen Programm-Module durch Anfügen einer in der verwendeten Hochsprache als Namensbestandteil nicht zugelassenen Zeichenfolge an die Namen der den internen Programm-Modulen zugrundeliegenden Quelltext-Module erzeugt werden. Auf diese Weise lassen sich die Namensklassen der internen und der fremden Programm-Module ohne besondere Anpassungen des Binders trennen. So kann beispielsweise der Namensbestandteil ein Zeichen enthalten, der in der vorgegebenen höheren Programmiersprache als Namensbestandteil nicht vorgesehen ist. Die Namensklassen werden so sicher voneinander getrennt, ohne daß die Namen der fremden Programm-Module verändert werden müssen.

Vorteilhaft wird fur den Fall, daß das aufrufende Programm-Modul ein anderes Programm-Modul nicht über dessen Namen, sondern über dessen Adresse aufruft, vorausgesetzt, daß der Name des aufgerufenen Programm-Moduls der Fremd-Namensklasse zugeordnet ist. Fur einen Aufruf eines Programm-Moduls über seine Adresse, im folgenden indirekter Aufruf genannt, wird also vorteilhaft genommen, daß der Name des aufgerufenen Programm-Moduls in der Fremd-Namensklasse enthalten ist. Ferner wird durch die Anpassungsroutinen erster Art der aufgerufenen internen Programm-Module festgestellt, welchem Vereinbarungssatz das jeweilige aufrufende Programm-Modul unterliegt, und nur bei voneinander abweichenden Vereinbarungssätzen des aufrufenden und aufgerufenen Programm-Moduls die Anpassung der vereinbarungssätze vorgenommen. Diese Maßnahme ermöglicht unter anderem, daß die durch den Hochsprach-Übersetzen erzeugten internen Programm-Module auch von dem effizienten Vereinbarungssatz unterliegenden Standard-Modulen, beispielsweise von Bibliotheksroutinen über ihre Adresse aufgerufen werden können.

In einer weitere Vorteilhaften Weiterbildung der Erfindung werden die Anpassungsroutinen erster Art jeweils mit einem Kennzeichnungscode versehen, durch den diese und die fremden Programm-Module voneinander zu unterscheiden sind. Bei einem indirekten Aufruf wird von dem aufrufenden internen Programm-Modul geprüft, ob unter der Adresse des aufgerufenen Programm-Moduls der Kennzeichnungscode abgelegt ist und eine Anpassung der voneinander abweichenden Vereinbarungssätze von aufrufendem und aufgerufenem Programm-Modul vorgenommen, falls kein Kennzeichnungscode unter dieser Adresse abgelegt ist. Dieser Verfahrensschritt erlaubt es, fremde Programm-Module, die keine Anpassungsroutine zweiter Art besitzen, aus den durch den Hochsprach-Übersetzer erzeugten internen Programm-Modulen heraus über ihre Adressen aufzurufen.

Vorteilhaft wird gemäß der Erfindung ein in Maschinensprache vorliegendes, dem effizienten Vereinbarungssatz unterliegendes Standard-Modul durch den Kennzeichnungscode ergänzt. Das Standard-Modul erhält neben dem ursprünglichen Namen aus der internen Namensklasse einen weiteren Namen aus der Fremd-Namensklasse. Auf diese Weise kann auch das Standard-Modul indirekt, d.h. über seine Adresse aufgerufen werden.

Durch die eben erläuterten Maßnahmen für indirekte Aufrufe werden die häufiger auftretenden direkten Aufrufe, d.h. die Aufrufe, welche die Namen der Programm-Module verwenden, kaum behindert.

Die Erfindung wird im folgenden an Hand der Figuren näher erläutert. Darin zeigen:
- Figur 1: eine schematische Darstellung eines bekannten Verfahrens zum Anpassen der Vereinbarungssätze,
- Figur 2: eine schematische Darstellung, in der das Trennen der Namensklassen erläutert ist,
- Figur 3: eine schematische Darstellung, in der die Funktionsweise der Anpassungsroutine erster Art erläutert ist,
- Figur 4: eine schematische Darstellung, in der die Funktionsweise der Anpassungsroutine zweiter Art erläutert ist,
- Figur 5: eine schematische Darstellung der Aufrufbeziehungen des Zielprogramms,
- Figur 6: eine schematische Darstellung der erzeugten Programm-Module und Anpassungsroutinen des Zielprogramms nach Figur 5,
- Figur 7: eine schematische Darstellung des von dem Binder erzeugten, lauffähigen Zielprogramms nach Figur 5,
- Figur 8: ein Flußdiagramm der modifizierten Anpassungsroutine erster Art bei einem indirekten Modulaufruf,
- Figur 9: eine schematische Darstellung der Anpassung des Vereinbarungssatzes des aufrufenden Programm-Moduls beim indirekten Modulaufruf,
- Figur 10: eine schematische Darstellung zur Erläuterung, wie ein Standard-Modul für indirekte Modulaufrufe zu modifizieren ist und
- Figur 11: eine Übersicht über die Anpassungen beim indirekten Modulaufruf.

Zum besseren Verständnis werden in den folgenden Figuren fremde Programm-Module einheitlich mit der Bezugsziffer 10, interne Programm-Module mit 12, Anpassungsroutinen erster bzw. zweiter Art mit 14 bzw. 16 und in einer Hochsprache verfaßte Quelltext-Module, die den lauffähigen Programm-Modulen zugrundeliegen, mit 18 bezeichnet.

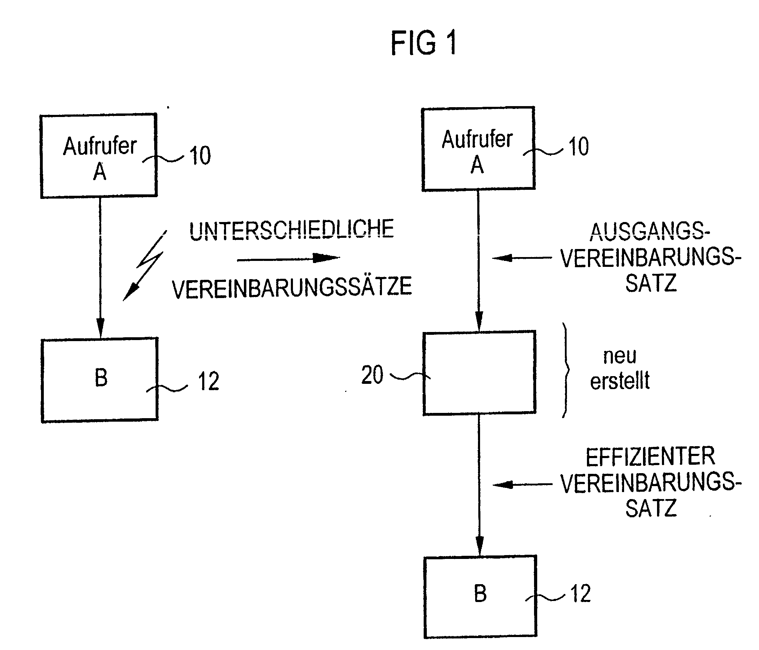

In Figur 1 ist das bekannte Verfahren zum Anpassen von Vereinbarungssätzen erläutert. In Figur 1 soll ein fremdes Programm-Modul 10 mit dem Namen A, das einem Ausgangs-Vereinbarungssatz von Verknüpfungsvereinbarungen unterliegt, mit einem internen Programm-Modul 12 mit dem Namen B verknüpft werden, für das ein effizienter Vereinbarungssatz von Verknüpfungsvereinbarungen vorgesehen ist. Diese beiden Vereinbarungssätze weichen voneinander ab, falls beispielsweise das interne Programm-Modul 12 mit dem Namen B durch einen Hochsprach-Übersetzer erzeugt ist und das fremde Programm-Modul 10 mit dem Namen A ein Assembler-Modul ist oder durch einen mit dem vorgegebenen Hochsprach-Übersetzer nicht kompatiblen Hochsprach-Übersetzer einer anderen höheren Programmiersprache erzeugt worden ist. Als Hochsprach-Übersetzer kommen Übersetzer in Frage, die in höheren Programmiersprachen wie COBOL, C, C++, Fortran etc. verfaßte Quelltext-Module in eine Maschinensprache übersetzen und so lauffähige Programm-Module erzeugen. Um bei dem bekannten Verfahren die voneinander abweichenden Verknüpfungsvereinbarungen des fremden Programm-Moduls 10 mit dem Namen A und des internen Programm-Moduls 12 mit dem Namen B zu überbrücken, muß von einem Programmentwickler eine Anpasssungsroutine 20 erstellt werden. Beim Verknüpfen der beiden Programm-Module 10, 12 durch einen Binder (nicht dargestellt) wird die Anpassungsroutine 20 mit eingebunden, um bei einem Aufruf des internen Programm-Moduls 12 mit dem Namen B durch das fremde Programm-Modul 10 mit dem Namen A die Anpassung der voneinander abweichenden Verknüpfungsvereinbarungen vorzunehmen. Bei dem bekannten Verfahren muß der Programmentwickler für jedes Modul, das von einem Programm-Modul mit abweichendem Vereinbarungssatz aufgerufen werden soll, eine solche Anpassungsroutine 20 erstellen.

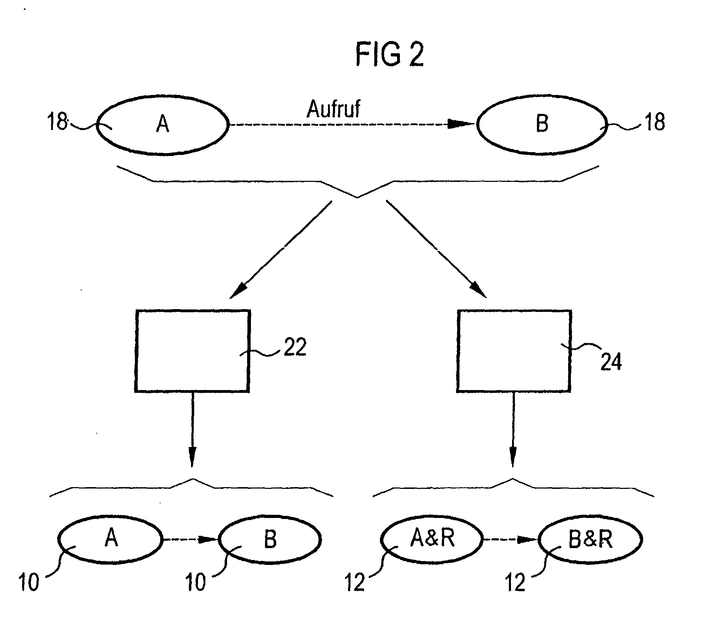

In Figur 2 ist dargestellt, wie bei dem erfindungsgemäßen Verfahren den unterschiedlichen Vereinbarungssätzen voneinander getrennte Namensklassen zugeordnet werden. In der vorgegebenen Hochsprache verfaßte Quelltext-Module 18 mit den Namen A und B werden sowohl durch einen Hochsprach-Übersetzer 22 gemäß dem Ausgangs-Vereinbarungssatz als auch durch einen Hochsprach-Übersetzer 24 gemäß dem effizienten Vereinbarungssatz übersetzt. Es wird nun festgelegt, daß die Namen der durch den Hochsprach-Übersetzer 22 erzeugten fremden Programm-Module 10 gegenüber den Namen der zugrundeliegenden Quelltext-Module 18 unverändert bleiben, nämlich A und B. Demgegenüber wird an die Namen der durch den Hochsprach-Übersetzer 24 erzeugten internen Programm-Module 12 die Zeichenfolge "&R" angehängt. Der Buchstabe "&" in der Zeichenfolge "&R" ist in keiner höheren Programmiersprache als Namensbestandteil eines Quelltext-Moduls zugelassen, so daß die Namen der internen Programm-Module 12 eine Namensklasse bilden, welche die Namen der fremden Programm-Module 10 mit Sicherheit nicht enthält. Den fremden Programm-Modulen 10 und den internen Programm-Modulen 12 sind also Namen aus sich gegenseitig ausschließenden Namensklassen zugeordnet, die eine Identifizierung des den jeweiligen Programm-Modulen zugeordneten Vereinbarungssatzes erlauben. In dem Beispiel nach Figur 2 sind die fremden Programm-Module 10 durch den Hochsprach-Übersetzer 22 erzeugt worden. Die fremden Programm-Module 10 können jedoch ebenso Assembler-Module oder in Maschinensprache vorliegende Programm-Module sein, die den Verknüpfungsvereinbarungen des Ausgangs-Vereinbarungssatzes unterliegen.

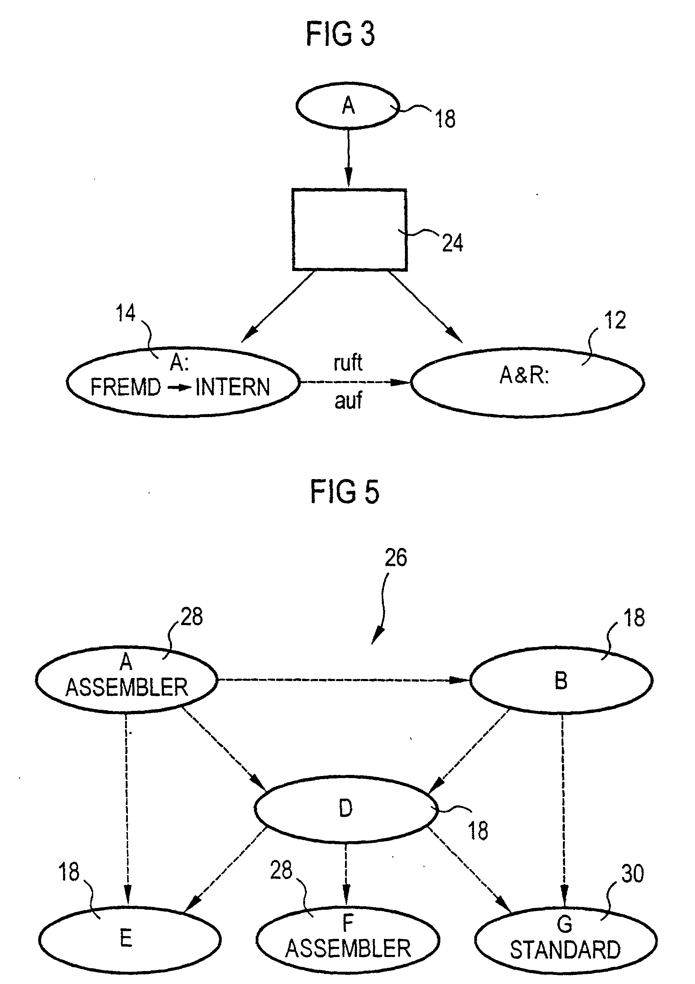

In Figur 3 ist die Funktionsweise einer Anpassungsroutine erster Art erläutert. Der Hochsprach-Übersetzer 24 erzeugt aus dem Quelltext-Modul 18 mit dem Namen A das interne Programm-Modul 12 mit dem Namen A&R. Das interne Programm-Modul 12 erfüllt dabei die Verknüpfungsvereinbarungen des effizienten Vereinbarungssatzes. Zusätzlich wird durch den Hochsprach-Übersetzer 24 eine Anpassungsroutine 14 erster Art erzeugt, die denselben Namen A wie das Quelltext-Modul 18 erhält. Der Name A der Anpassungsroutine 14 ist der dem Ausgangs-Vereinbarungssatz zugehörigen Namensklasse, d.h. der Fremd-Namensklasse zugeordnet. Die mit dem Namen A aufzurufende Anpassungsroutine 14 paßt den Ausgangs-Vereinbarungssatz an den effizienten Vereinbarungssatz an und ruft das mit dem Namen A&R versehene interne Programm-Modul 12 auf. Die Anpassungsroutine 14 erster Art kann von dem Hochsprach-Übersetzer 24 automatisch erzeugt werden, da diesem die Anzahl und der Typ der Parameter des erzeugten internen Programm-Moduls 12 bekannt sind.

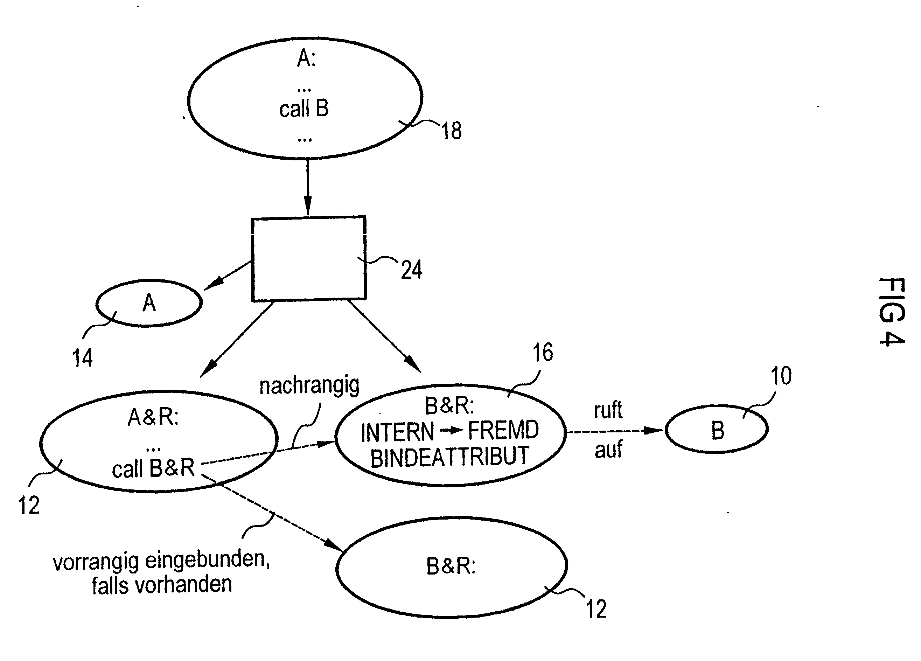

In Figur 4 ist die Funktionsweise einer Anpassungsroutine 16 zweiter Art erläutert. In dem Quelltext-Modul 18 mit dem Namen A ist ein Programmbefehl "call B" vorgesehen, mit dem ein weiteres Quelltext-Modul mit dem Namen B aufgerufen wird. Durch den Hochsprach-Übersetzer 24 wird aus dem Quelltext-Modul 18 mit dem Namen A die in Figur 3 erläuterte Anpassungsroutine 14 erster Art ebenfalls mit dem Namen A und das interne Programm-Modul 12 mit dem Namen A&R erzeugt. Von dem internen Programm-Modul 12 aus wird nun jedes Programm-Modul grundsätzlich gemäß dem effizienten Vereinbarungssatz und mit dem für den effizienten Vereinbarungssatz festgelegten Namen aufgerufen. In diesem Beispiel ruft so das interne Programm-Modul A&R das Programm-Modul mit dem Namen B&R auf. Für jedes von dem internen Programm-Modul 12 aufgerufene Programm-Modul wird eine Anpassungsroutine 16 zweiter Art erzeugt, die in der Lage ist, den effizienten Vereinbarungssatz an den Ausgangs-Vereinbarungssatz anzupassen. Die Anpassungsroutine 16 zweiter Art erhält dabei einen Namen aus der dem effizienten Vereinbarungssatz zugeordneten Namensklasse, d.h. der internen Namensklasse. In dem Beispiel nach Figur 4 erstellt der Hochsprach-Übersetzer 24 somit die Anpassungsroutine 16 zweiter Art mit dem Namen B&R. Die Anpassungsroutine 16 mit dem Namen B&R ist zudem mit einem Bindeattribut versehen, welches den Binder veranlaßt, die Anpassungsroutine 16 nur dann einzubinden, wenn kein internes Programm-Modul mit dem Namen B&R vorhanden ist. Trifft der Binder ein solches internes Programm-Modul nicht an, so bindet er die Anpassungsroutine 16 ein, welche die notwendige Anpassung der Vereinbarungssätze vornimmt und daraufhin das fremde Programm-Modul 10 mit dem Namen B aufruft.

Durch die in den Figuren 2 bis 4 erläuterten Maßnahmen können einzelne Programm-Module, die unterschiedlichen Vereinbarungssätzen unterliegen, durch den Binder zu einem Zielprogramm verknüpft werden, ohne daß der Programmentwickler die Anpassungsroutinen selbst erstellen muß.

Das Zusammenwirken der eben erläuterten Maßnahmen wird im folgenden an Hand der Figuren 5 bis 8 an einem Beispiel erläutert.

In Figur 5 sind die zu einem Zielprogramm 26 zu verknüpfenden Programm-Module und die Aufrufbeziehungen zwischen diesen Programm-Modulen dargestellt. Das Zielprogramm 26 besteht aus Assembler-Modulen 28 mit den Namen A und F, die dem Ausgangs-Vereinbarungssatz unterliegen, den in der Hochsprache verfaßten Quelltext-Modulen 18 mit den Namen B, D, E, die dem effizienten Vereinbarungssatz unterliegen, und einem ebenfalls dem effizienten Vereinbarungssatz unterliegenden Standard-Modul 30 mit dem Namen G. Das Zielprogramm 26 sieht vor, daß das Assembler-Modul A die Quelltext-Module B, D, E aufruft. Von dem Quelltext-Modul B werden wiederum das Quelltext-Modul D und das Standard-Modul G aufgerufen. Das Quelltext-Modul D ruft schließlich das Quelltext-Modul E, das Assembler-Modul F und das Standard-Modul G auf.

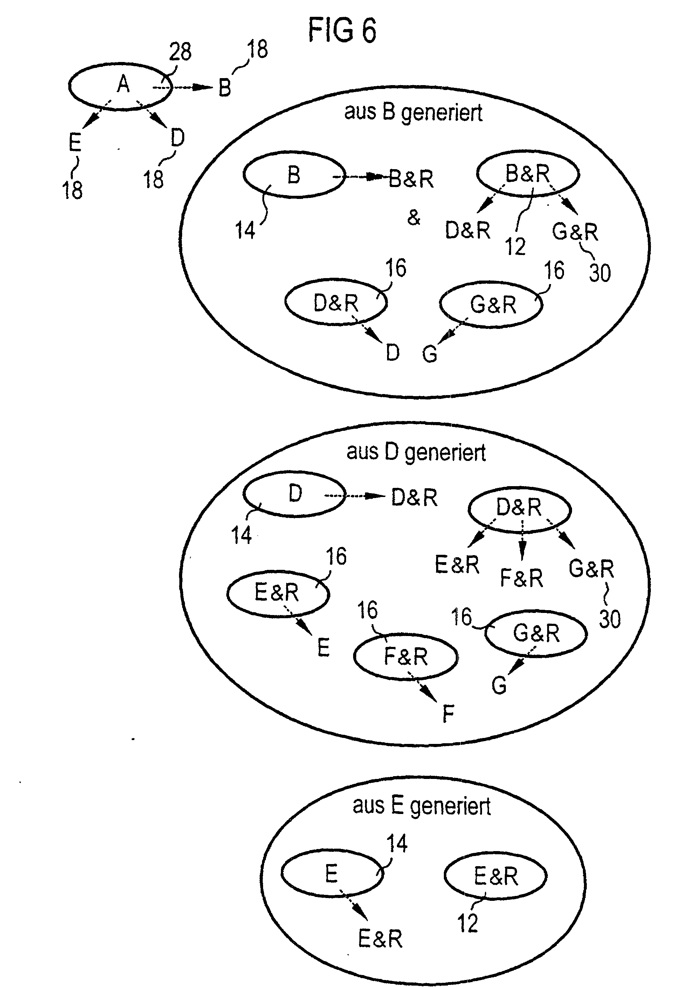

In Figur 6 sind die durch den Hochsprach-Übersetzer 24 erzeugten Programm-Module und die Anpassungsroutinen des Zielprogramms nach Figur 5 dargestellt. Beim Übersetzen der Quelltext-Module 18 (vgl. Fig. 5) mit den Namen B, D, E werden die entsprechenden internen Programm-Module 12 mit den Namen B&R, D&R, E&R erzeugt. Ferner erstellt der Hochsprach-Übersetzer 24 die Anpassungsroutinen 14 erster Art mit den Namen B, D, E. Von den internen Programm-Modulen 12 werden weitere Programm-Module mit den Namen aus der internen Namensklasse aufgerufen. Das interne Programm-Modul B&R ruft so das Standard-Modul 30 mit dem Namen G&R sowie das interne Programm-Modul D&R auf. Ebenso ruft das interne Programm-Modul 12 mit dem Namen D&R das Standard-Modul 30 mit dem Namen G&R, das Assembler-Modul 28 mit dem Namen F&R sowie das interne Programm-Modul E&R auf. Es ist darauf hinzuweisen, daß das dem effizienten Vereinbarungssatz unterliegende Standard-Modul 30 mit dem Namen G&R zu versehen ist, falls es diesen Namen nicht schon hat. Dies läßt sich leicht über eine automatisch realisierbare Umbenennung erreichen.

Der Hochsprach-Übersetzer 24 erzeugt schließlich für die Programm-Module, die von den internen Programm-Modulen 12 aufgerufen werden, die entsprechenden, mit dem Bindeattribut versehenen Anpassungsroutinen 16 zweiter Art. Für das interne Programm-Modul B&R sind dies die Anpassungsroutinen 16 mit den Namen D&R und G&R. Entsprechend werden für das interne Programm-Modul 12 mit dem Namen D&R die Anpassungsroutinen 16 mit den Namen G&R, F&R und G&R erzeugt. Wie Figur 6 zu entnehmen ist, können die Anpassungsroutinen durch verschiedene Übersetzungsvorgänge mehrmals erzeugt werden. So wird beispielsweise die Anpassungsroutine 16 mit dem Namen G&R sowohl bei der Übersetzung des Quelltext-Moduls B als auch bei der Übersetzung des Quelltext-Moduls D erstellt.

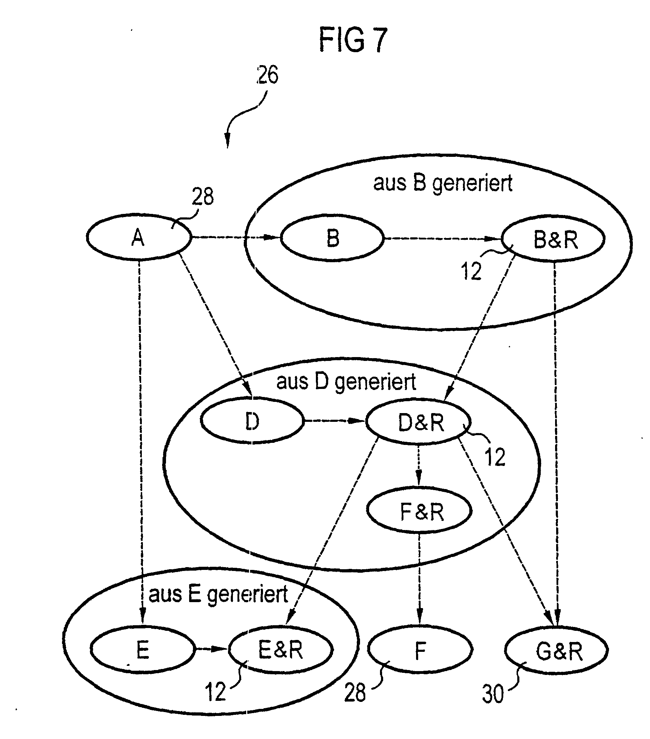

In Figur 7 ist schließlich das von dem Binder erzeugte, lauffähige Zielprogramm 26 gezeigt, das durch Verknüpfen der einzelnen Programm-Module entstanden ist. Hier ist nochmals verdeutlicht, wie die internen Programm-Module B&R, D&R, E&R von dem Assembler-Modul 28 mit dem Namen A aus über die Namen B, D und E aufgerufen werden. Dementsprechend wird das Assembler-Modul 28 mit dem Namen F von dem internen Programm-Modul 12 mit dem Namen D&R über die Anpassungsroutine mit dem Namen F&R aufgerufen. Im Gegensatz dazu ruft das interne Programm-Modul 12 mit dem Namen B&R das interne Programm-Modul 12 mit dem Namen G&R ohne Zwischenschaltung einer Anpassungsroutine auf, da bei diesem Aufruf keine Anpassung der Vereinbarungssätze nötig ist.

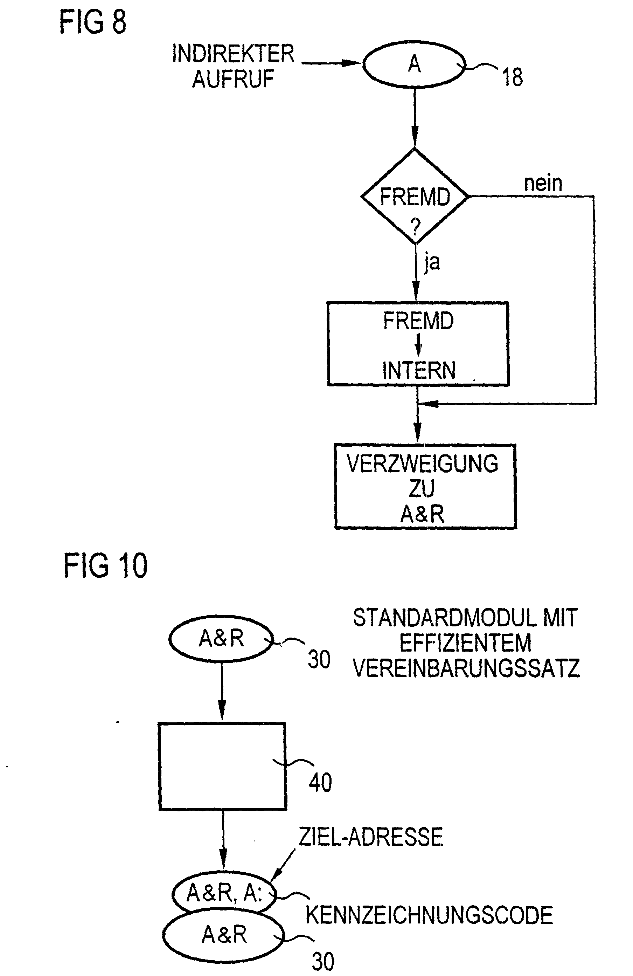

In manchen höheren Programmiersprachen, z.B. der Sprache C, ist es möglich, ein Programm-Modul nicht nur über seinen Namen, sondern auch über seine Adresse, im weiteren Ziel-Adresse genannt, d.h. über einen "Funktions-Zeiger" auf seine Ziel-Adresse aufzurufen, so daß beim aufrufenden Programm-Modul der Name des aufgerufenen Programm-Moduls nicht mehr bekannt ist, sondern nur noch dessen Ziel-Adresse. Für diese indirekten Modulaufrufe ist das oben beschriebene Verfahren, das auf dem Trennen der den verschiedenen Vereinbarungssätzen zugrundeliegenden Namensklassen beruht, etwas zu modifizieren, wie im folgenden an Hand der Figuren 8 bis 10 erläutert wird.

Figur 8 zeigt ein Flußdiagramm einer modifizierten Anpassungsroutine erster Art bei einem indirekten Modulaufruf. Zunächst wird vorausgesetzt, daß der Funktions-Zeiger stets auf eine Variante des Programm-Moduls zeigt, die dem Ausgangs-Vereinbarungssatz unterliegt. Der indirekte Aufruf erfolgt so in Figur 8 auf die Routine mit dem Namen A. Die Anpassungsroutine erster Art ist nun insofern modifiziert, als daß sie durch eine Abfrage feststellt, welchem Vereinbarungssatz das aufrufende Programm-Modul unterliegt. Bei der Anpassungsroutine nach Figur 8 wird abgefragt, ob der Aufruf gemäß dem Ausgangs-Vereinbarungssatz erfolgt ist. Ist dies nicht der Fall, d.h. erfolgte der indirekte Aufruf gemäß dem effizienten Vereinbarungssatz, so findet keine Anpassung der Vereinbarungssätze statt und es wird das Programm-Modul mit dem Namen A&R aufgerufen. Stellt die modifizierte Anpassungsroutine erster Art fest, daß das aufrufende Programm-Modul dem Ausgangs-Vereinbarungssatz unterliegt, so findet die Umsetzung dieses Vereinbarungssatzes auf den effizienten Vereinbarungssatz statt, bevor das Programm-Modul A&R aufgerufen wird.

Wie ein Kriterium zum Erfassen des Vereinbarungssatzes, gemäß dem der indirekte Aufruf erfolgt, festgelegt werden kann, hängt von den konkreten Verknüpfungsvereinbarungen ab. So ist es beispielsweise möglich, ein Register, das bei dem Ausgangs-Vereinbarungssatz nicht verwendet wird, aber bei dem effizienten Vereinbarungssatz stets mit einer gültigen Befehlsadresse besetzt ist, als Kriterium festzulegen, indem es bei Routinen mit Ausgangs-Vereinbarungssatz definiert auf eine vorgegebene ungültige Befehls-Adresse gesetzt wird.

Die in Figur 8 erläuterte Modifizierung der Anpassungsroutine erster Art erlaubt es, die durch den Hochsprach-Übersetzer erzeugten internen Programm-Module auch von Standard-Modulen aus, die dem effizienten Vereinbarungssatz unterliegen, z.B. Bibliotheksroutinen, über Funktions-Zeiger aufzurufen.

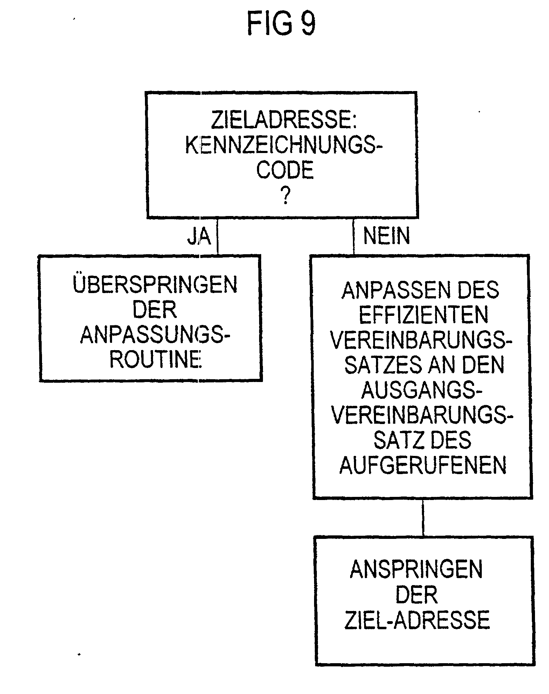

Um ferner den indirekten Aufruf von fremden Programm-Modulen, die keine Anpassungsroutinen besitzen, aus internen Programm-Modulen heraus zu ermöglichen, ist eine weitere Modifizierung der Anpassungsroutinen erster Art nötig. So wird den Anpassungsroutinen erster Art ein Kennzeichnungscode vorangestellt, der die Anpassungsroutine als solche kennzeichnet. Als Kennzeichnungscode kann beispielsweise ein spezieller Leerbefehl verwendet: werden, der ansonsten bei der Erzeugung eines Maschinencodes nicht verwendet wird. Bei einem indirekten Aufruf über die Ziel-Adresse des aufzurufenden Programm-Moduls wird geprüft, ob unter der Ziel-Adresse der Kennzeichnungscode abgelegt ist, wie in Figur 9 dargestellt ist. Ist dies der Fall, d.h. zeigt der Funktions-Zeiger auf eine Anpassungsroutine erster Art, so wird diese übersprungen, da auch die aufzurufende Programmroutine dem effizienten Vereinbarungssatz unterliegt und somit keine Anpassung der Vereinbarungssätze notwendig ist. Wird unter der Ziel-Adresse der Erkennungscode nicht vorgefunden, so bedeutet dies, daß über den Funktions-Zeiger ein fremdes Programm-Modul mit Ausgangs-Vereinbarungssatz aufgerufen werden soll. In diesem Fall wird der effiziente Vereinbarungssatz des aufrufenden Programm-Moduls auf den Ausgangs-Vereinbarungssatz des aufzurufenden Programm-Moduls umgesetzt und die Ziel-Adresse angesprungen.

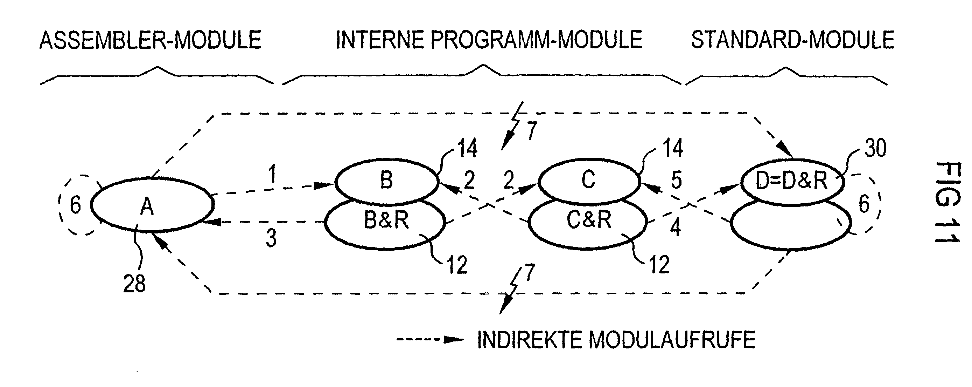

In Figur 10 ist gezeigt, wie das Standard-Modul 30 mit effizientem Vereinbarungssatz zu modifizieren ist, um indirekte Modulaufrufe mit Funktions-Zeigern zu ermöglichen. Das Standard-Modul 30 mit dem Namen A&R wird mittels eines Hilfsprogramms 40 mit dem in Figur 9 erläuterten Kennzeichnungscode versehen. Zudem erhält das Standard-Modul 30 neben dem Namen A&R den Namen A, der dem Ausgangs-Vereinbarungssatz zugeordnet ist. Bei einem indirekten Modulaufruf des Standard-Moduls 30 wird nun unter der Ziel-Adresse der Kennzeichnungscode vorgefunden, so daß wie in Figur 9 erläutert, ein indirekter Aufruf des Standard-Moduls 30 von dem internen Programm-Modul aus erfolgen kann, ohne daß eine Anpassung der Vereinbarungssätze vorgenommen werden muß.

Durch das Zusammenspiel der in den Figuren 8 bis 10 erläuterten Maßnahmen sind indirekte Modulaufrufe über Funktions-Zeiger möglich zwischen:
internen Programm-Modulen untereinander, die durch den Hochsprach-Übersetzer 24 erzeugt sind,
internen Programm-Modulen, die durch den Hochsprach-Übersetzer 24 erzeugt sind, und fremden Programm-Modulen, die dem Ausgangs-Vereinbarungssatz unterliegen, z.B. Assembler-Modulen,
internen Programm-Modulen, die durch den Hochsprach-Übersetzer erzeugt sind, und Standard-Modulen, die dem effizienten Vereinbarungssatz unterliegen, z.B. Bibliotheksroutinen.

Dies ist nochmals in der nachfolgenden Tabelle zusammenfassend dargestellt.

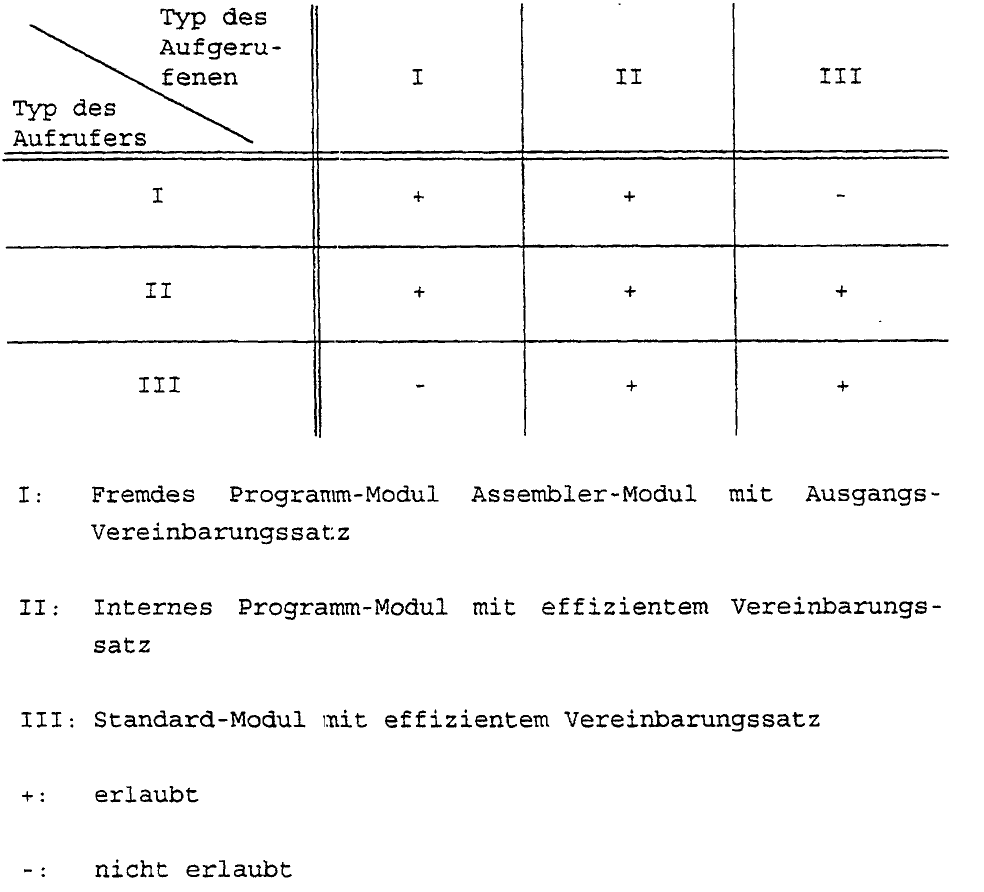

Figur 11 gibt eine Übersicht über die durchgeführten Anpassungen der Vereinbarungssätze bei indirekten Modulaufrufen.

Dargestellt ist das Assembler-Modul 28 mit dem Namen A, das durch den Hochsprach-Übersetzer 24 erzeugte interne Programm-Modul 12 mit dem Namen B&R und die diesem zugeordnete Anpassungsroutine 14 erster Art mit dem Namen B, das durch den Hochsprach-Übersetzer 24 erzeugte interne Programm-Modul 12 mit dem Namen C&R und die diesem zugeordnete Anpassungsroutine 14 erster Art mit dem Namen C und das Standard-Modul 30, das sowohl mit dem Namen D als auch mit dem Namen D&R vorliegt.

Bei dem indirekten Modulaufruf 1 findet die Anpassung der Vereinbarungssätze durch die Anpassungsroutine 14 mit dem Namen B statt. Bei den Aufrufen 2 findet keine Anpassung statt, da die aufrufenden Programm-Module 12 mit den Namen B&R, C&R den Kennzeichnungscode der Anpassungsroutinen 14 mit den Namen B bzw. C erkennen, und wie in Figur 9 gezeigt verzweigt wird. Bei Aufruf 3 wird bei dem Assembler-Modul 28 mit dem Namen A der Kennzeichnungscode nicht vorgefunden, so daß die Anpassung der Vereinbarungssätze bei dem aufrufenden Programm-Modul 12 mit dem Namen B&R vorgenommen wird. Bei Aufruf 4 erkennt das aufrufende Programm-Modul 12 mit dem Namen C&R wie bei Aufruf 2 den Kennzeichnungscode und verzweigt, wie in Figur 9 dargestellt ist, ohne eine Anpassung der Vereinbarungssätze vorzunehmen. Auch bei Aufruf 5 wird keine Anpassung der Vereinbarungssätze vorgenommen, da die aufgerufene Anpassungsroutine 14 mit dem Namen C das interne Programm-Modul 12 mit dem Namen C&R aufruft, und für das Standard-Modul 30 mit dem Namen D&R und das interne Programm-Modul 12 mit dem Namen C&R keine Anpassung der Vereinbarungssätze notwendig ist. Mit 6 sind Aufrufe zwischen Programm-Modulen bezeichnet, die von vornherein demselben Vereinbarungssatz unterliegen, so daß auch in diesem Fall keine Anpassung der Vereinbarungssätze notwendig ist. Mit 7 sind schließlich indirekte Aufrufe zwischen dem Assembler-Modul 28 mit dem Namen A und dem Standard-Modul 30 mit dem Namen D bzw. D&R bezeichnet, die bei dem erfindungsgemäßen Verfahren verboten sind.

## Patentansprüche

1. Verfahren zum Steuern einer Datenverarbeitungsanlage zum Erzeugen eines Zielprogramms (26) durch Verknüpfen mehrerer Programm-Module,
bei dem durch einen Hochsprach-Übersetzer (24) erzeugte, einem effizienten Vereinbarungssatz von Verknüpfungsvereinbarungen unterliegende interne Programm-Module mit Namen aus einer internen Namensklasse versehen werden (12),
bei dem einem Ausgangs-Vereinbarungssatz von Verknüpfungsvereinbarungen unterliegende fremde Programm-Module (10) mit Namen aus einer Fremd-Namensklasse versehen werden, wobei sich die den jeweiligen Vereinbarungssätzen zugeordneten Namensklassen gegenseitig ausschließen,
bei dem für die internen Programm-Module (12) jeweils eine Anpassungsroutine (14) erster Art erzeugt wird, die mit einem dem Namen des zugehörigen internen Programm-Moduls (12) entsprechenden Namen aus der Fremd-Namensklasse versehen wird und die vor einem Aufruf des zugehörigen internen Programm-Moduls (12) eine Anpassung des Ausgangs-Vereinbarungssatzes des aufrufenden fremden Programm-Moduls (10) an den effizienten Vereinbarungssatz des aufzurufenden internen Programm-Moduls (12) vornimmt,
bei dem von den internen Programm-Modulen aus aufzurufende Programm-Module mit Namen aus der internen Namensklasse aufgerufen werden,
bei dem für die von den internen Programm-Modulen (12) aufzurufenden Programm-Module jeweils eine Anpassungsroutine (16) zweiter Art erzeugt wird, die mit einem dem Namen des zugehörigen Programm-Moduls entsprechenden Namen aus der internen Namensklasse versehen wird und die vor einem Verzweigen zu einem fremden Programm-Modul eine Anpassung des effizienten Vereinbarungssatzes an den Ausgangs-Vereinbarungssatz des aufzurufenden fremden Programm-Moduls (10) vornimmt, wobei die Anpassungsroutine (16) zweiter Art mit einem Bindeattribut versehen ist, so daß sie nur dann in ein Zielprogramm (26) eingebunden wird, wenn neben ihr kein gleichnamiges internes Programm-Modul (12) vorhanden ist,
und bei dem die internen Programm-Module (12), die fremden Programm-Module (10) und die benötigten Anpassungsroutinen erster (14) und zweiter Art (16) miteinander zu dem Zielprogramm (26) verknüpft werden.

2. Verfahren nach Anspruch 1, **dadurch gekennzeichnet, daß** die fremden Programm-Module (10) in einer Assembler-Sprache verfaßt sind.

3. Verfahren nach Anspruch 1, **dadurch gekennzeichnet, daß** die fremden Programm-Module (10) in einer Maschinensprache vorliegen.

4. Verfahren nach einem der vorhergehenden Ansprüche, **dadurch gekennzeichnet, daß** die Namen der internen Programm-Module (12) durch Anfügen einer in der verwendeten Hochsprache als Namensbestandteil nicht zugelassenen Zeichenfolge (&R) an die Namen der den internen Programm-Modulen zugrundeliegenden Quelltext-Module (18) erzeugt werden.

5. Verfahren nach einem der vorhergehenden Ansprüche, **dadurch gekennzeichnet, daß** für den Fall, daß das aufrufende Programm-Modul ein anderes Programm-Modul nicht über dessen Namen, sondern über dessen Adresse aufruft, vorausgesetzt wird, daß der Name des aufgerufenen Programm-Moduls der Fremd-Namensklasse zugeordnet ist,
und daß durch die Anpassungsroutinen erster Art der aufgerufenen internen Programm-Module (12) festgestellt wird, welchem Vereinbarungssatz das jeweilige aufrufende Programm-Modul unterliegt, und nur bei voneinander abweichenden Vereinbarungssätzen des aufrufenden und aufgerufenen Programm-Moduls die Anpassung der Vereinbarungssätze vorgenommen wird.

6. Verfahren nach Anspruch 5, **dadurch gekennzeichnet, daß** die Anpassungsroutinen (16) erster Art jeweils mit einem Kennzeichnungscode versehen werden, durch den diese und die fremden Programm-Module (10) voneinander zu unterscheiden sind.

7. Verfahren nach Anspruch 6, **dadurch gekennzeichnet, daß** bei einem indirekten Aufruf geprüft wird, ob unter der Adresse des aufgerufenen Programm-Moduls der Kennzeichnungscode abgelegt ist und eine Anpassung der voneinander abweichenden Vereinbarungssätze von aufrufendem und aufgerufenem Programm-Modul genau dann vorgenommen wird, falls kein Kennzeichnungscode unter dieser Adresse abgelegt ist.

8. Verfahren nach Anspruch 7, **dadurch gekennzeichnet, daß** ein in Maschinensprache vorliegendes, dem effizienten Vereinbarungssatz unterliegendes Standard-Modul (30) durch den Kennzeichnungscode ergänzt wird und neben dem ursprünglichen Namen aus der internen Namensklasse einen weiteren Namen aus der Fremd-Namensklasse erhält.

## Claims

1. Method for controlling a data processing system for producing an object program (26) by linking a plurality of program modules,
in which internal program modules, which are produced by means of a high-level language translator (24) and
are subject to an efficient declaration statement of linking declarations, are provided with names from an internal name class (12),
in which external program modules (10) which are subject to an original declaration statement of linking declarations are provided with names from an external name class, in which case the name classes associated with the respective declaration statements are mutually exclusive,
in which a matching routine (14) of a first type is produced for each of the internal program modules (12), is provided with a name, which corresponds to the name of the associated internal program module (12) from the external name class and, before calling the associated internal program module (12) matches the original declaration statement of the calling external program module (10) to the efficient declaration statement of the internal program module (12) to be called,
in which program modules to be called by the internal program modules are called using names from the internal name class,
in which a matching routine (16) of a second type is produced for each of the program modules to be called by the internal program modules (12), which matching routine (16) is provided with a name, which corresponds to the name of the associated program module, from the internal name class and, before jumping to an external program module, matches the efficient declaration statement to the original declaration statement of the external program module (10) to be called, in which case the matching routine (16) of the second type is provided with a linking attribute, so that it is linked to an object program (26) only when, apart from it, there is no internal program module (12) with the same name,
and in which the internal program modules (12), the external program modules (10) and the required matching routines of the first (14) and second (16) types are linked to one another to form the object program (26).

2. Method according to Claim 1, **characterized in that** the external program modules (10) are written in an assembler language.

3. Method according to Claim 1, **characterized in that** the external program modules (10) are in a machine language.

4. Method according to one of the preceding claims, **characterized in that** the names of the internal program modules (12) are produced by attaching a character sequence (&R) which is not allowed as a name component in the high-level language used, to the names of the source text modules (18) on which the internal program modules are based.

5. Method according to one of the preceding claims, **characterized in that**, in the situation where the calling program module does not call another program module via its name but via its address, it is presupposed that the name of the called program module is assigned to the external name class, and in that the matching routines of the first type for the called internal program modules (12) are used to find the declaration statement to which the respective calling program module is subject, and the matching of the declaration statements is carried out only if the declaration statements of the calling and called program modules differ from one another.

6. Method according to Claim 5, **characterized in that** the matching routines (16) of the first type are each provided with an identification code, by means of which they and the external program modules (10) can be distinguished from one another.

7. Method according to Claim 6, **characterized in that**, when an indirect call takes place, a check is carried out to determine whether the identification code is stored at the address of the called program module, and matching of the mutually different declaration statements of the calling and called program modules is carried out only if no identification code is stored at this address.

8. Method according to Claim 7, **characterized in that** a standard module (30) which is in machine language and is subject to the efficient declaration statement is supplemented by the identification code and, in addition to the original name from the internal name class, is given a further name from the external name class.

## Revendications

1. Procédé de commande d'une installation de traitement de données pour produire un programme (26) cible par combinaison de plusieurs modules programmes,
dans lequel des modules programmes internes produits par un traducteur (24) en langage évolué et sous-jacent à un jeu efficace de déclaration de combinaison sont munis de noms d'une classe interne de noms (12),
dans lequel des modules programmes (10) étrangers et sous-jacents à un jeu de sortie de déclaration de combinaison sont munis de noms provenant d'une classe de noms étrangers, les classes de noms associées aux jeux de combinaison respectives s'excluant mutuellement,
dans lequel il est produit pour le module programme (12) interne respectivement une routine (14) d'adaptation d'un premier type qui est munie d'un nom choisi dans la classe de noms étrangers correspondant au nom du module programme (12) interne correspondant et qui effectue sur appel du module programme (12) interne correspondant une adaptation du jeu de combinaison de sortie du module programme (10) étranger appelant au jeu de combinaison efficace du module programme (12) interne à appeler,
dans lequel des modules programmes à appeler provenant de modules programmes internes et ayant des noms choisis dans la classe de noms internes sont appelés,
dans lequel il est produit pour les modules programmes à appeler dans les modules programmes (12) internes respectivement une routine (16) d'adaptation d'un deuxième type qui est munie d'un nom choisi dans la classe interne de noms qui correspond au nom du module programme associé et qui effectue avant une bifurcation sur un module programme étranger une adaptation du jeu de combinaison efficace au jeu de combinaison de sortie du module programme (10) étranger appelant, la routine (16) d'adaptation du deuxième type étant munie d'un attribut de liens, de sorte qu'elle est introduite dans le programme (26) cible que s'il n'y pas à côté d'elle de modules programmes (12) internes de même nom, et
dans lequel les modules programmes (12) internes, les modules programmes (10) étrangers et les routines d'adaptation nécessaires du premier (14) et du deuxième (16) type sont combinés entre eux en le programme (26) cible.

2. Procédé suivant la revendication 1, **caractérisé en ce que** les modules programmes (10) étrangers sont écrits dans un langage d'assembleur.

3. Procédé suivant la revendication 1, **caractérisé en ce que** les modules programmes (10) étrangers se présentent en un langage machine.

4. Procédé suivant l'une des revendications précédentes, **caractérisé en ce que** les noms des modules programmes (12) internes sont produits, par adjonction d'une suite de signes (&R) non autorisés, comme constituants de noms dans le langage évolué utilisé, aux noms des modules (18) de texte source à la base des modules programmes internes.

5. Procédé suivant l'une des revendications précédentes, **caractérisé en ce que** dans le cas où le module programme appelant appelle un autre module programme non par son nom, mais par son adresse, il est supposé que le nom du module programme appelé est associé à la classe de noms étrangers et en ce qu'il est constaté par les routines d'adaptation du premier type des modules programmes (12) internes appelés quel est celui des jeux de combinaison qui est sous-jacent aux modules programmes appelant respectifs et que l'adaptation des jeux de combinaison n'est effectuée que si les jeux de combinaison du module programme appelant et du module programme appelé diffèrent l'un de l'autre.

6. Procédé suivant la revendication 5, **caractérisé en ce que** les routines (16) d'adaptation du premier type sont munies respectivement d'un code d'identification par lequel ces routines et les modules programmes (10) étrangers peuvent être distingués les uns des autres.

7. Procédé suivant la revendication 6, **caractérisé en ce que** dans le cas d'un appel indirect il est vérifié si le code d'identification est mis sous l'adresse du module programme appelé et une adaptation des jeux de combinaison différents entre eux du module programme appelant et du module programme appelé est effectuée justement dans le cas où il n'y a pas été mis de code d'identification à cette adresse.

8. Procédé suivant la revendication 7, **caractérisé en ce qu'**un module standard (30) présent dans le langage machine et sous-jacent au jeu efficace de combinaison est complété par le code d'identification et reçoit outre le nom d'origine provenant de la classe de noms internes un autre nom provenant de la classe de noms étrangers.
